Europäisches Patentamt

European Patent Office

Office européen des brevets

(11) Publication number: **0 067 054**
**B1**

## EUROPEAN PATENT SPECIFICATION

(45) Date of publication of patent specification: **13.11.85**

(21) Application number: **82302898.0**

(22) Date of filing: **04.06.82**

(51) Int. Cl.[4]: **A 01 C 23/04,** A 01 M 7/00

(54) Sprayer for multifactorial agrochemical interaction tests.

(30) Priority: **06.06.81 HU 169581**

(43) Date of publication of application:
**15.12.82 Bulletin 82/50**

(45) Publication of the grant of the patent:
**13.11.85 Bulletin 85/46**

(84) Designated Contracting States:
**AT BE CH DE FR GB IT LI LU NL SE**

(56) References cited:
**DE-A-2 641 349**
**DE-A-2 738 263**
**DE-B-2 502 407**
**US-A-2 905 117**
**US-A-4 171 710**
**US-A-4 220 998**

(73) Proprietor: **Tejfalussy, András**
**Lajos utca 115**
**H-1036 Budapest (HU)**

(72) Inventor: **Tejfalussy, András**
**Lajos utca 115**
**H-1036 Budapest (HU)**

(74) Representative: **Gold, Tibor Zoltán et al**
**T.Z.GOLD & COMPANY 9, Staple Inn**
**London WC1V 7QH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a sprayer for multifactorial agrochemical interaction tests, used to advantage for the fast, exact and energy-saving conduct of chemical fertilization and agent experiments.

The problem is well-known in practice that the possibilities are extremely limited for testing the joint effect of several agrochemical factors. This can be attributed to several reasons. Firstly no machines exist which are suitable for multifactorial experiments. The so-called logarithmic sprayers worked out for the purpose of unifactorial experiments do not allow the testing of further factors. On the other hand, the complicated multifactorial connections cannot be derived from the results of the unifactorial experiments without the risk of error. Namely, the interaction processes are characterized in that the factors may alter the effect of each other.

Though procedures have already been worked out for multifactorial experiments, due to complicated parcellisations such procedures allow for experiments using a maximum of three factors. Mechanical difficulties arise already in the case of two factors because of the complicated machine lines. In any case, these so-called random experiment programmes make almost impossible the exact interpretation of the interactions because the inter-plot penetrations appearing at random increase the disturbing background. The so-called gradient method worked out for phytotrons cannot be used under ploughland conditions, because the dislevel-ments of the agricultural land (own gradient-distributions) arrange the data measured on the plot in a definite pattern, and thus the different effects cannot be sorted out. On the other hand, in the case of using the so-called random block arrangements, mechanization is again impossible. The available experiments, as mentioned, are not suitable for clarification of the interaction problems, nor for recognition, or in a given case for optimization, of the multifactorial interaction process. If the experiments are set up by manual methods, then the manual and mechanical settings differ to such extent that the obtained results are not suitable at all for optimization of the technological operations to be carried out with machines.

The actual interactions are always more than unifactorial, and they can be traced back frequently to 5—10 or even more factors. Thus, the present means are not suitable for solving the practical problems not only for conceptual, but also for practical reasons. Further, the only suitable solution must be applicable under ploughland conditions as well.

DE—A—2641349 discloses a system for applying chemicals from a moving vehicle in which the rate of dosage is kept constant independently of the speed of the vehicle and in which the amount of chemicals to be dispensed is adjustable within wide limits.

However, the present invention is concerned with a machine which can spray a plurality of liquids through a plurality of nozzles in a manner which can vary in time and also from nozzle to nozzle. A positioning mechanism is used to correlate programming of the machine with the actual position on the field to be treated. In this way set and fully reproducible ratios of liquid can be applied to a plot of ground so that the best possible combination of fertilizers and other agents can be achieved.

To this end, the present invention provides a machine for spraying liquids in a selected pattern on an area comprising a chassis movable in a path over the area in a travel direction; a plurality of storage tanks adapted for holding a plurality of selected liquids; a plurality of variable output pumps each connected to one of said storage tanks for pumping a selected liquid at a selected rate; a mixing tank connected to each of said pumps for receiving each selected liquid; mixing means associated with said mixing tank for mixing the selected liquid supply to said mixing tank together; an accumulator connected to said mixing tank; and a plurality of nozzles for discharging the mixture of selected liquids, characterised by a plurality of variable throttle valves connected to said mixing tank for supplying the mixed together selected liquids at a plurality of selected rates; and by control means connected to said pumps and said valves for controlling said selected rates as a function of a programme which contains information corresponding to the selected pattern; and by a position sensor connected to said control means for inputting information to said control means on a position of said chassis along said path as a parameter of the programme; and in that said nozzles are equal in number to said variable throttle valves, each nozzle being connected to one of said variable throttle valves for discharging the mixture of selected liquids and said nozzles being aligned with each other in a direction perpendicular to said path.

The invention is therefore aimed at the realization of a machine which is suitable for conducting multifactorial experiments under ploughland and/or similar conditions, whereby manual experiments can be replaced. Also plots suitable for reducing the interpretation disturbing background can be arranged at a fast rate and at minimal energy-input, particularly in the case of tests conducted with spray solutions and/or liquid agents.

A further objective of the invention is to ensure a sprayer for complex interaction agrochemical experiments and for the variation of several factors.

The invention is based on the recognition that sought objectives may be attained by forming the spraying machine for the realization of multifactorial wave distributions in such a way that a distributing conduit and/or cock systems are formed for adjustment of the optional gradient or wave distribution perpendicularly to the course of the machine, which is connected with a mixer to a tank containing homogenized liquid and the liquid supply of this tank is ensured by feeders of adjustable output from tanks containing liquid of different composition.

Furthermore the invention is based on the recognition that the delivery output of the feeders for ensuring the liquid supply of the mixing tank, i.e. the tank containing the liquid homogenized with the mixer is controlled suitably by computer or microprocessor in such a way that in respect of the quantity of the liquid components the composition of the liquid distributed in the parallel runs of the machine should correspond to the wave distribution perpendicular to the course of the machine.

In this way the proportion of each component in the mixture can be distributed along the direction perpendicular to the course of the machine according to waves of different periodicity.

Furthermore the invention is based on the recognition that it facilitates a more accurate realization of wave distributions, when the conduit and/or cock system for optional adjustment of the gradient or wave distribution perpendicularly to the course and the mixing tank ensuring the liquid supply are parallel operated units arranged side by side. The units consist of feeders with separately adjustable delivery outputs for ensuring that the liquid supply of the mixing tank is formed in an arrangement perpendicular to the course.

Furthermore the invention is based on the recognition that it is advantageous if the cock system can be remotely controlled from the driver's cabin of the machine, or, in case of towed constructions, from that of the tractor.

In order to obtain the objectives of the invention, in other words that the sprayer should control the conduct of multifactorial experiments according to specified characteristics under ploughland and/or similar conditions, especially in case of experiments with chemical fertilizers and agents, the sprayer has a conduit and/or cock system for adjustment of the optional gradient or wave distribution perpendicular to the course, which is connected to a mixing mechanism arranged in the homogenizing tank. The homogenizing tank with mixing mechanism is connected to one or more feeders with separately adjustable delivery outputs ensuring the liquid supply. The feeders are connected as outflow regulators to tanks supplying the liquid components. In a given case several parallel-connected units are arranged side by side perpendicularly to the course of the machine.

In a possible construction of the sprayer according to the invention the control units of the cock systems are connected to a self-homing or position sensing device programmed for the optional adjustment of the cock systems and in given case provided also with programmes and/or peripheral units for controlling adjustment, checking and recording, in addition to the operation.

In another possible construction of the sprayer according to the invention the cock system is connected to a remote control unit arranged in the driver's cabin of the spraying machine, or in that of the tractor.

In any of the constructions an interlocking coordinated with the runs of the spraying machine is built-in for the adjacent of the cock system so as to enable the spraying machine to ensure spray distribution between the adjacent plots of the treated area. This results in a minimal border-effect by the separate adjustment of the cocks.

The invention is described in detail by way of example with reference to the accompanying drawings, in which:

Figure 1 is a schematic diagram showing a construction of the liquid distribution mechanism of the spraying machine according to the invention;

Figure 2 is a schematic diagram of unit I marked in Figure 1;

Figure 3 illustrates the runs or course of the spraying machine over a field according to the invention and corresponding to the wave distribution; and

Figure 4 illustrates a single complex testing system in which the runs of the spraying machine according to the invention are connected to the runs of machines realizing other wave distributions.

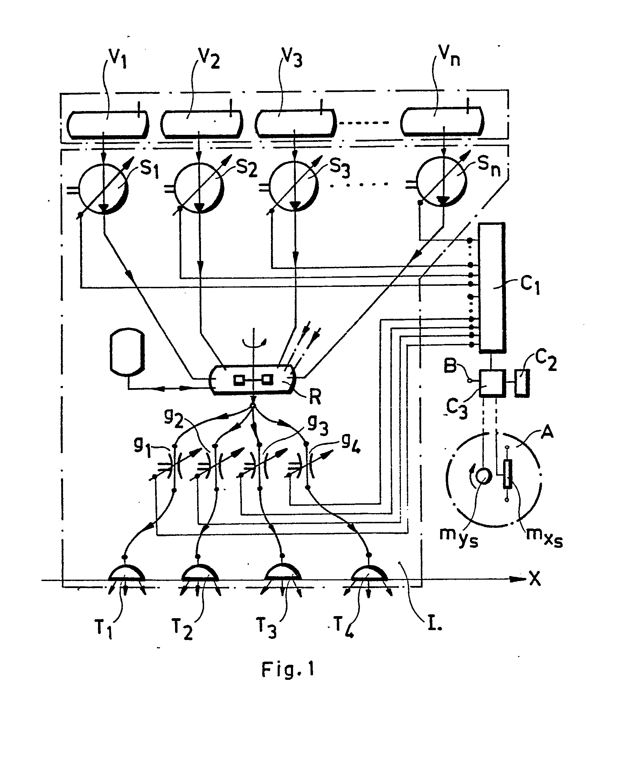

One of the possible constructions shown by way of example in Figure 1, is a spraying mechanism combined with a spray distributor. The spraying mechanism mounted on a chassis moves perpendicularly to direction $x$, on which the delivery output of variable pumps or feeders $S_1$, $S_2$, $S_3$, ...$S_n$ and variable throttle or choke valves $g_1$, $g_2$, $g_3$, $g_4$ etc. can be set independently from each other according to the runs. The liquid delivery output from tanks $V_1$, $V_2$, $V_3$...$V_4$ to tank R is homogenizing with a mixer in the tank R and can be adjusted by the optional setting of feeders $S_1$, $S_2$, $S_3$...$S_n$. The liquid delivery towards nozzles $T_1$, $T_2$, $T_3$, $T_4$ etc. according to the given gradient and/or wave-function can be optionally adjusted in the choking and/or by-passing range of choke valves $g_1$, $g_2$, $g_3$, $g_4$ etc. by setting the choking of choke valves $g_1$, $g_2$, $g_3$, $g_4$ etc. to a lesser or greater extent.

The nozzles $T_1$, $T_2$, $T_3$, $T_4$ etc. are arranged in direction $x$, i.e. along a header perpendicularly to the direction of travel of the spraying mechanism. As shown in Figure 1, the feeders $S_1$, $S_2$, $S_3$...$S_n$ are built in between tanks $V_1$, $V_2$, $V_3$...$V_n$ containing the liquid components and/or tank R provided with the mixer for homogenizing the liquid components, while choke valves $g_1$, $g_2$, $g_3$, $g_4$ etc. are arranged between tank R, the header ensuring adequate liquid distribution and the connected nozzles $T_1$, $T_2$, $T_3$, $T_4$ etc., which form an x-directional line suitably perpendicular to the direction of movement of the sprayer.

The bypass settings of feeders $S_1$, $S_2$, $S_3$...$S_n$ and choke valves $g_1$, $g_2$, $g_3$, $g_4$ etc. allow spraying

according to any specified gradient and/or wave function not only in the direction of travel of the sprayer, but in direction $x$ as well perpendicularly to the direction of travel, through coordination of the bypass-regulating delivery output and runs of the machine. It is possible for instance that the machine performs the spraying along its course according to all possible mixing proportions of the liquid components, in the process of which the quantity of the total liquid sprayed on the surface perpendicularly to the course may vary according to the wave function, but in a given case it may also be uniform. On the other hand, the mechanism is also suitable for the uniform liquid distribution along the course of the machine, but the proportion of the liquid components combined with the total quantity of the liquid compositions distributed on the surface varies in direction $x$ perpendicular to the course. In this way the mechanism allows the minimization of the inter-plot penetrations by arrangement of the treatment variations according to the wave-functions.

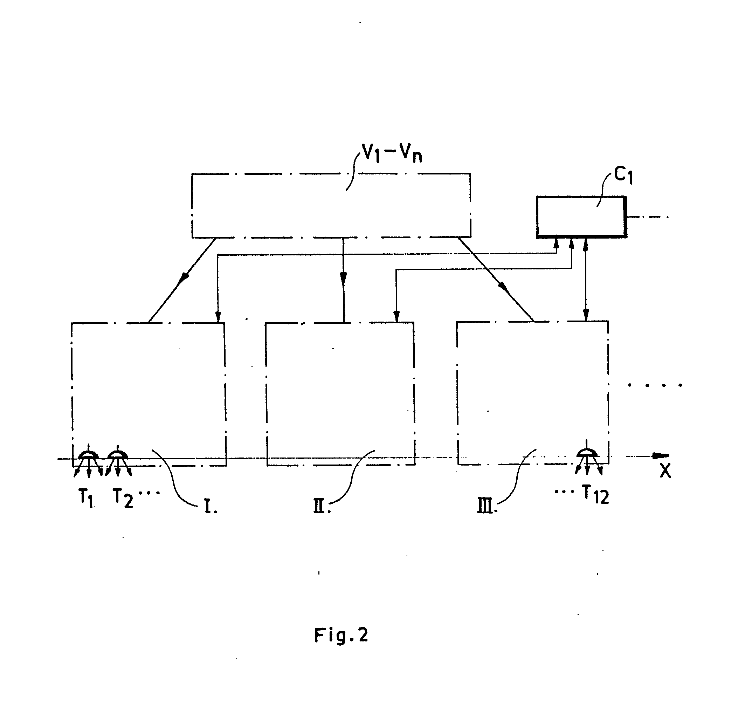

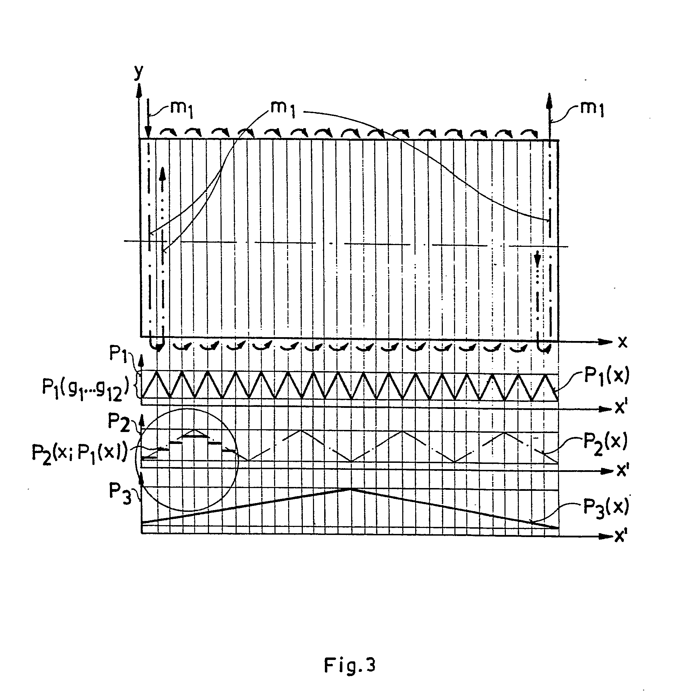

Figure 2 shows another possible construction. In this case the sprayer is built up from several units I, II, III, ... etc., in such a way that nozzles $T_1$, $T_2$, $T_3$, $T_4$ etc. .. $T_5$, $T_6$, $T_7$, $T_8$, etc. .... $T_9$, $T_{10}$, $T_{11}$, $T_{12}$ etc. of units I, II, III, etc. are arranged in adjacent groups perpendicularly to the direction of travel of the machine. Their liquid supply system may be formed with separate tanks $V_1$, $V_2$, $V_3$ ... $V_n$, but for the distribution of one or several components common tanks $V_1$, $V_2$, $V_3$ ... $V_n$ may also be used between units I, II, III, etc. In this way the independently adjustable feeders $S_1$, $S_2$, $S_3$ ... $S_n$ allow, as shown in Figure 3, for a better approximation of the wave distributions along direction $x$, e.g. in case of liquid component $P_2$ this construction allows the realization of functions $P_2/x$; $P_1(x)/$ as well, resulting less border-effect between the plots. The run programme presented by way of example for application of the sprayer according to the invention is shown in Figure 3. In this case feeder $S_1$ of the sprayer is capable of charging the liquid component in tank $V_1$ according to function $P_3(x)$ in the runs $m_1$) perpendicular to direction $x$, while feeder $S_2$ is capable of charging the liquid component from tank $V_2$ according to function $P_2(x)$, or in a given case according to $P_2/x$; $P_1(x)/$. Feeding of further liquid components from tanks $V_3$ ... $V_n$ with feeders $S_3$ ... $S_n$ can be determined by calculation in such a way that the liquid quantity delivered through $S_1$, $S_2$, $S_3$ ... $S_n$ into the mixing tank R corresponds in its totality to a given constant in the case of any run $m_1$. The sprayer is capable of varying the distribution output of nozzles $T_1$, $T_2$, $T_3$, $T_4$ etc. along direction $x$ according to function $P_1(x)$, depending on the quality of the nozzles and/or bypass capacity of the corresponding choke valves $g_1$, $g_2$, $g_3$, $g_4$ etc. As seen in the diagram, the composition or quantity of the liquid distributed along runs $m_1$ in directions y and −y corresponding to runs $m_1$ is constant, but in case of the different runs $m_1$ it

varies in direction $x$ from run to run according to the specified wave functions $P_1(x)$, $P_2(x)$ and $P_3(x)$ etc.

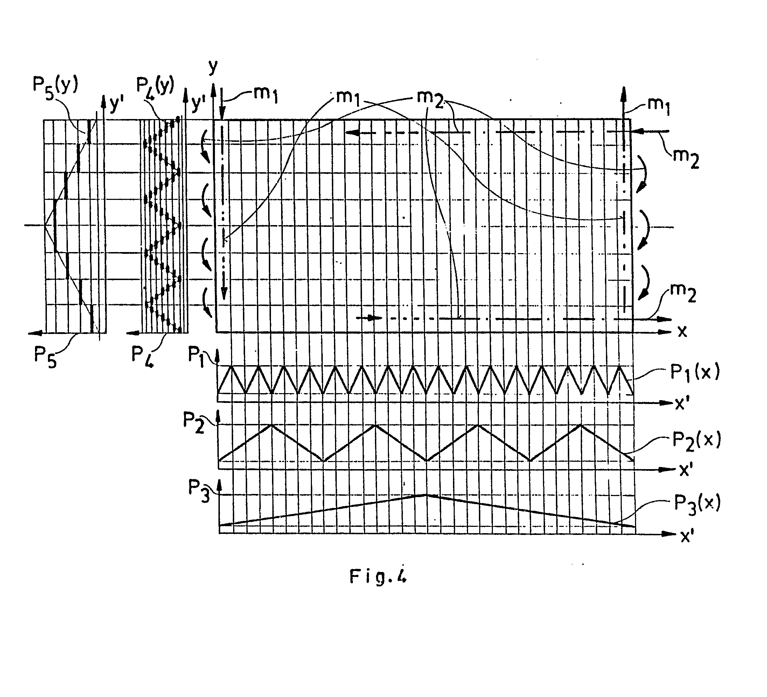

Naturally by control of feeders $S_1$, $S_2$, $S_3$ ... $S_n$ the composition can be varied along the course as well, the same way as in the case of one factor with the known logarithmic sprayer. However this is preferable only if the sprayer has several nozzles $T_1$, $T_2$ ... $T_{11}$, $T_{12}$ .. etc., and a single run $m_1$ is sufficient for the realization of the wave composition. In this case the sprayer according to the invention is capable of realizing for instance in run $m_1$, the distributions $P_4$ and $P_5$ shown in Figure 4., i.e. the corresponding total compositions. Such a setting is also possible when the $P_4$ and $P_5$ correspond to a component weight %, and the parameter $P_2$ corresponds to the total quantity, while according to parameters $P_4$ and $P_5$ the ratio of two further components is varied by the sprayer. (Or in the case of using fertilization with the injector nozzles $T_1$ ... $T_{12}$). The track-line formed by runs $m_2$ is shown in Figure 4. This is significant when the wave distribution-realizing machines travel on an experimental field along two different directions. In a given case the sprayer according to the invention realizes the wave distributions of parameters $P_1$, $P_2$, $P_3$ as described above, and the chemical fertilizer sprayers realize the feeding of granulated chemical fertilizers or other materials distributed according to $P_4$ and $P_5$. Thus use of the sprayer enables the formation of a plot system for the conduction of complex agrochemical interaction tests, where the disturbing inter-plot penetration (so-called border-effect) will become insignificant, or almost completely eliminated. This allows significant area and energy-saving, since fewer plants and less area are required for the tests, and the experimental treatments can be realized in a simple way with travelling machines making a few run series $m_1$ and $m_2$, consequently at a faster rate, within a shorter time and with much lower energy utilization than before. An extra advantage is that the testing range of the parameters can be set almost continuously and within optional limits, and it is possible to expand the combined solutions for the repeated experiment by variations of the more extensive ranges in respect of the parameters, consequently the optimum appears on a larger area, on more plants and thus the testing is more reliable. A further advantage is that the wavy runs can be symmetrically selected, as shown in Figures 3 and 4. This allows, on the basis of repeated runs on the field, the inhomogeneities of the soil representing the conditions of the habitat also to be evaluated. A further advantage is that composition of the weed-killers and the additive technologies preventing damage to the host-plant can be improved with the sprayer in a simple way. Moreover, these improvements can be tested by mechanical experiments as a function of other habitat-influencing factors as well (e.g. chemical fertilizer compositions, water supply characteristics, etc.). An additional advantage is that the sprayer, in respect of the basis unit, can be constructed at a low cost. Naturally automation of experimental settings is also possible and checking and recording are also feasible with the aid of up-to-date computer and control-technical means.

The sprayer enables the realization of crop-harvesting operations in the same way and with the same means as before, which is highly significant in the case of multi-plot experiments. Namely the experimental plots in this case too are adjacent, moreover the cultivating tracks are not necessary either, which facilitates the harvesting, since the runs of the harvester are adjacent each other just as in the case of the large-scale cultivation. Apart from this, for the same reasons a data survey too can be carried out by aeroplane, which saves several tests which are difficult to conduct by other means. The sprayer allows direct comparison of the data of adjacent plots in the evaluation, which is highly significant, because the possibly damaged plots can be instantly recognized by comparison with the adjacent plots. A higher accuracy of the evaluation can be attained since the basic data reflect less accidental effect, they are more accurate and more consistent. Apart from this, the versatile sprayer allows for the exact repetition of given experimental arrangements in different locations and at different times. One of the preferable fields of application of the sprayer is related to aerial photography including satellite space photographs as well.

Infra-red colour etc, photographs taken of the habitats can be verified with multi-plot, multi-fractorial and adequately reiterated interaction experiments. Naturally, space photographs supplemented with a terrestrial data survey offer even more accurate relationship-determination. The sprayer can be used to advantage for indoor experiments as well, because the space and labour demands are considerably reduced for the multifactorial experiments.

Operation of the sprayer may be automated in a simple way for application in any field, since the settings can be more easily coordinated with simpler track-lines. Naturally the sprayer can be used for spraying of metals and other materials and for related testing.

The variable pumps S1...Sn and the variable throttle valves g'...g4 are controlled by control means $C_1$—$C_3$. 'A' designates a homing device or positioning device which senses the position of the chassis on the field, that is the position in the runs m' or $m^2$, by position sensors Mys and Mxs.

The mixing tank R also is connected to an accumulator by a pressure line shown with double arrows.

## Claims

1. A machine for spraying liquids in a selected pattern on an area comprising a chassis movable in a path over the area in a travel direction; a plurality of storage tanks (V'.. Vn) adapted for holding a plurality of selected liquids; a plurality of variable output pumps (S'...Sn) each connected to one of said storage tanks for pumping a selected liquid at a selected rate; a mixing tank (R) connected to each of said pumps for receiving each selected liquid; mixing means associated with said mixing tank for mixing the selected liquid supply to said mixing tank together; an accumulator connected to said mixing tank; and a plurality of nozzles (T'...Tn) for discharging the mixture of selected liquids, characterised by a plurality of variable throttle valves (g'...gn) connected to said mixing tank for supplying the mixed together selected liquids at a plurality of selected rates, and by control means (C'—$C^3$, B) connected to said pumps and said valves for controlling said selected rates as a function of a programme which contains information corresponding to the selected pattern; and by a position sensor connected to said control means for inputting information to said control means on a position of said chassis along said path as a parameter of the programme; and in that said nozzles are equal in number to said variable throttle valves, each nozzle being connected to one of said variable throttle valves for discharging the mixture of selected liquids and said nozzles being aligned with each other in a direction perpendicular to said path.

2. A machine according to claim 1, further characterised in that said control means includes a microprocessor and programme means for providing said microprocessor with a programme for controlling said selected rates.

## Revendications

1. Une machine de pulvérisation de liquide suivant un motif sélectionné sur un terrain, comprenant un châssis mobile selon un cheminement sur le terrain dans une direction de déplacement; une pluralité de réservoirs de stockage (V...V') adpatés pour contenir une pluralité de liquides sélectionnés; une pluralité de pompes à débit variable ($S_1$...$S_n$), chacune reliée à l'un desdits réservoirs de stockage pour pomper un liquide sélectionné à un débit sélectionné; un réservoir mélangeur (R) relié à chacune desdites pompes pour recevoir chaque liquide sélectionné; un moyen mélangeur associé audit réservoir mélangeur pour mélanger ensemble les liquides sélectionnés dans ledit réservoir mélangeur; un accumulateur relié audit réservoir mélangeur; et une pluralité de buses ($T_1$...$T_n$) pour décharger le mélange de liquides sélectionnés, caractérisée par une pluralité de valves à étranglement variable ($g_1$...$g_n$) reliées audit réservoir mélangeur pour distribuer les liquides sélectionnés et mélangés ensemble à plusieurs débits sélectionnés, et par des moyens de commande ($C_1$—$C_3$, B) reliés auxdites pompes et auxdites valves pour commander lesdits débits sélectionnés en fonction d'un programme qui contient une information correspondant au motif sélectionné; et par un detecteur de position relié audit moyen de commande pour introduire dans ledit moyen de commande une information concernant une position dudit châssis le long dudit cheminement comme un paramètre du programme; et en ce que lesdites buses sont en nombre égal auxdites valves à étranglement variable, chaque buse étant reliée à l'une desdites valves à étranglement variable pour décharger le melange de liquide sélectionné et lesdites buses étant alignées l'une avec l'autre dans une direction perpendiculaire audit cheminement.

2. Une machine selon la revendication 1, caractérisé en ce que ledit moyen de commande comprend un microprocesseur et un moyen de programmation pour fournir audit microprocesseur un programme pour la commande desdits débits sélectionnés.

**Patentansprüche**

1. Maschine zum Versprühen von Flüssigkeiten in einem ausgewählten Muster auf einer Fläche, mit einem in einer Fahrtrichtung entlang eines Weges über die Fläche bewegbaren Fahrgestell, einer Mehrzahl von Vorratsbehältern ($V_1$...$V_n$) für eine Mehrzahl von ausgewählten Flüssigkeiten, einer Mehrzahl von variablen Ausgabepumpen ($S_1$...$S_n$), die jeweils an einen der Vorratsbehälter zum Pumpen einer vorbestimmten Flüssigkeit in einer vorbestimmten Rate angeschlossen sind, einem Mischtank (R), der an jede der Pumpen zum Aufnehmen jeder ausgewählten Flüssigkeit angeschlossen ist, Mischeinrichtungen, die dem Mischtank zum Mischen der in den Mischtank zugeführten ausgewählten Flüssigkeiten zugeordnet ist, einem an den Mischtank angeschlossen Akkumulator und einer Mehrzahl von Düsen ($T_1$...$T_n$) zum Ausgeben des Gemisches ausgewählter Flüssigkeiten, gekennzeichnet durch eine Mehrzahl von variablen Drosselventilen ($g_1$...$g_n$), die an den Mischtank zum Fördern des Gemischs ausgewählter Flüssigkeiten in einer Mehrzahl von ausgewählten Raten angeschlossen ist, und durch Steuereinrichtungen ($C_1$—$C_3$, B), die an die Pumpen und an die Ventile zur Steuerung der ausgewählten Raten als Funktion eines Programmes angeschlossen sind, welches eine Information entsprechend ausgewählten Muster enthält, und durch einen Positionsfühler, der an die Steuereinrichtung zum Eingeben eine Information in die Steuereinrichtung über eine Position des Gestells entlang des Weges als ein Parameter des Programmes angeschlossen ist, wobei die Anzahl der Düsen mit derjenigen der varibalen Drosselventile übereinstimmt, jede Düse an eines der variablen Drosselventile zum Ausgeben des Gemischs ausgewählter Flüssigkeiten angeschlossen ist und die Düsen in einer Richtung senkrecht zu dem Weg aufeinander ausgerichtet sind.

2. Maschine nach Anspruch 1, dadurch gekennzeichnet, daß die Steuereinrichtung einen Mikroprozessor und eine Programmeinrichtung zum Zuführen eines Programmes in den Mikroprozessor zum Steuern der ausgewälten Raten aufweist.

0 067 054

Fig. 1

1

$V_1 - V_n$

$C_1$

$T_1$   $T_2 \cdots$   I.

II.

III.

$\cdots T_{12}$

X

Fig.2

Fig.3

0 067 054

Fig.4

4